# EUROPÄISCHE PATENTSCHRIFT

(11) **EP 0 854 830 B1**
(45) Veröffentlichungstag und Bekanntmachung des Hinweises auf die Patenterteilung: **18.08.1999**
(21) Anmeldenummer: 96937326.5
(22) Anmeldetag: 31.10.1996
(51) Int. Cl.: B65G 1/08, B65G 11/20

(54) **AUFTEILEINRICHTUNG**
SORTER
SYSTEME DE REPARTITION

(30) Priorität: 13.08.1996 AU PN145796
(43) Veröffentlichungstag der Anmeldung: 29.07.1998
(73) Patentinhaber: Mörchen, Wolfgang, 90513 Zirndorf (DE)
(72) Erfinder: Mörchen, Wolfgang, 90513 Zirndorf (DE)
(74) Vertreter: Torggler, Paul, Dr.
(86) Internationale Anmeldenummer: EP9604751
(87) Internationale Veröffentlichungsnummer: WO9806645

(56) Entgegenhaltungen:
- US-A- 2 730 223
- US-A- 4 205 936
- US-A- 5 220 986

## Beschreibung

Die vorliegende Erfindung betrifft eine Aufteileinrichtung in Form eines Sorters, die zugeführte Waren auf einzelne Ausgabestellen aufteilt.

Mechanisch arbeitende Aufteileinrichtungen werden dazu benutzt, einzelne Warenstücke auf bestimmte, von einem Steuerrechner vorgegebene Ausgabestellen zu verteilen. Bei Einzweck-Anlagen zur Aufteilung von Tiefkühlkost arbeitet der Sorter bei einer Umgebungstemperatur von -27 °C. Da bei diesen Bedingungen keine Unterbrechung der Tiefkühlkette zu befürchten ist, können die Ausgabestellen der Aufteileinrichtung beliebig ausgestaltet sein.

Da jedoch Großhändler in zunehmendem Maße sowohl Tiefkühlkost als auch Molkereiprodukte vertreiben, und aus wirtschaftlichen Überlegungen dafür nur eine einzelne Aufteileinrichtung verwenden wollen, hat sich das Anforderungsprofil an eine Aufteileinrichtung in den letzten Jahren stark verändert. Bei gemischtem Betrieb von Tiefkühlkost und Molkereiprodukten muß die Aufteileinrichtung bei einer Umgebungstemperatur von +5 °C betrieben werden, da Molkereiprodukte keinesfalls eine Verweildauer von mehr als 5 Minuten im Temperaturbereich von -27 °C überstehen, ohne daß wäßrige oder eiweißhaltige Bestandteile dauerhaft geschädigt werden.

Aufgabe der Erfindung ist es daher, durch spezielle Ausgestaltung der Ausgabestellen der Aufteileinrichtung die Lagerung der Warenstücke einer Kommission, beispielsweise eines standardisierten Gitter-Rollbehäkers, während eines Kommissionierlaufes der Aufteileinrichtung und während der anschließenden Packzeit des Gitter-Rollbehälters derart zu ermöglichen, daß ohne Kühlung bei der Aufteilung von Tiefkühlware eine Temperatur von -18 °C nicht überschritten wird.

Dies wird erfindungsgemäß dadurch gelöst, daß die Ausgabestellen als wärmeisolierte Speicherrutschen ausgebildet sind.

Durch die Speicherrutschen wird der Höhenunterschied zwischen der Aufteileinrichtung und den Entnahmestellen überwunden, wobei die Warenstücke unter Einfluß der Schwerkraft schräg nach unten rutschen. Die Wärmeisolierung (Wärmedämmung) der Speicherrutschen stellt sicher, daß die Tiefkühlware auch bei einer Umgebungstemperatur von +5 °C stets bei einer Temperatur von mindestens -18 °C oder darunter bleibt, wie dies aus lebensmittelhygienischen Gründen erforderlich ist.

Da bei Aufteileinrichtungen je nach Systemgröße oft über 100 Speicherrutschen benötigt werden, ist es für eine kompakte Bauform der Gesamtanlage günstig, wenn die Speicherrutschen rohrförmig ausgebildet sind und Rechteckquerschnitt aufweisen.

Bei der Ausgestaltung der Speicherrutschen darf nicht nur die mögliche Erwärmung der Tiefkühlware berücksichtigt werden, sondem auch eine Unterkühlung der Molkereiprodukte. Besonders kritisch ist es in diesem Zusammenhang, wenn nach längerem Betrieb der Aufteileinrichtung mit Tiefkühlware die Kommissionierung von Molkereiprodukten beginnt. Um den kühlenden Einfluß der Rutschenmasse auf die Molkereiprodukte so gering wie möglich zu halten, ist es günstig, wenn die Speicherrutschen aus einem Material gefertigt werden, bei dem der erforderliche Werkstoffeinsatz aufgrund hoher spezifischer Festigkeit ein technisches Minimum des Produktes "Rutschenmasse mal spezifischer Wärme" ergibt, also beispielsweise faserverstärkter Kunststoff. Für günstige Reibungsbeiwerte der Materialpaarung Rutsche/Ware haben sich neben Metallblech, vorzugsweise Stahl, auch Kunststoffbeschichtungen der Rutschenoberfläche als vorteilhaft erwiesen.

Für eine optimale Wärmeisolierung bzw. Wärmedämmung der Speicherrutschen ist es günstig, wenn die Speicherrutschen mit einer lsolierstoffschicht überzogen sind. Besonders geeignet ist dabei Schaumstoff mit einer Dicke von mindestens 2 cm.

Weitere Merkmale und Einzelheiten der vorliegenden Erfindung ergeben sich aus der nachfolgenden Figurenbeschreibung. Dabei zeigt:
- Fig. 1: einen schematischen Grundriß einer erfindungsgemäßen Aufteileinrichtung,
- Fig. 2: einen Längsschnitt durch zweilagig übereinander angeordnete, wärmeisolierte Speicherrutschen,
- Fig. 3: einen Querschnitt entlang der Linie A-A in Fig. 1 und

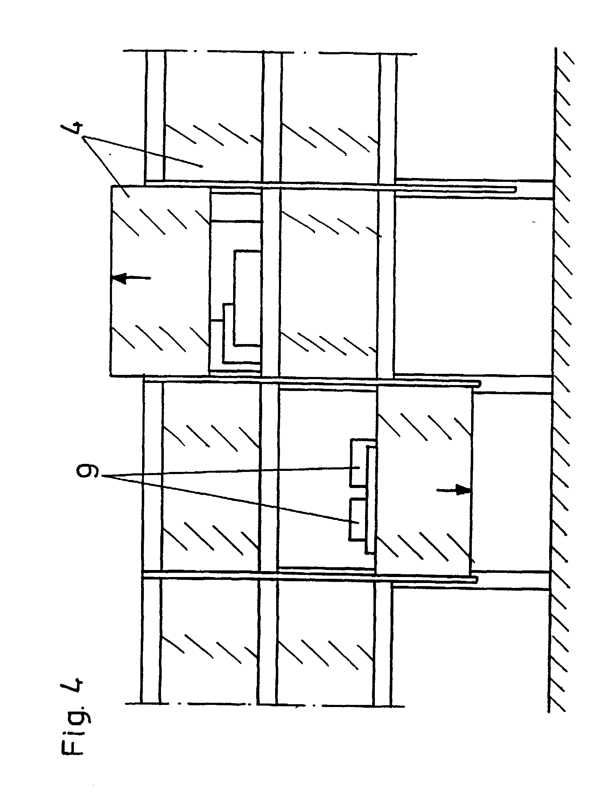

- Fig. 4: einen Ausschnitt der Vorderansicht der Aufteileinrichtung.

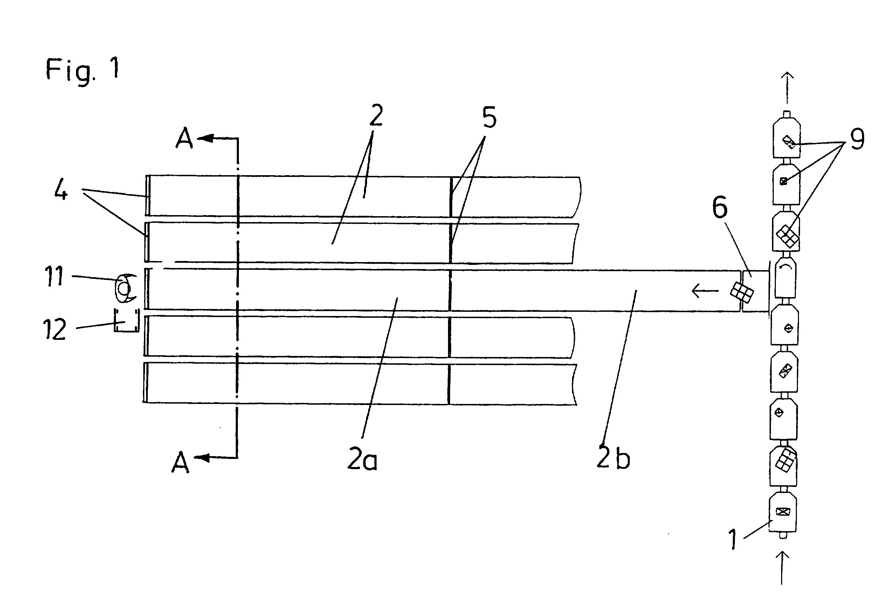

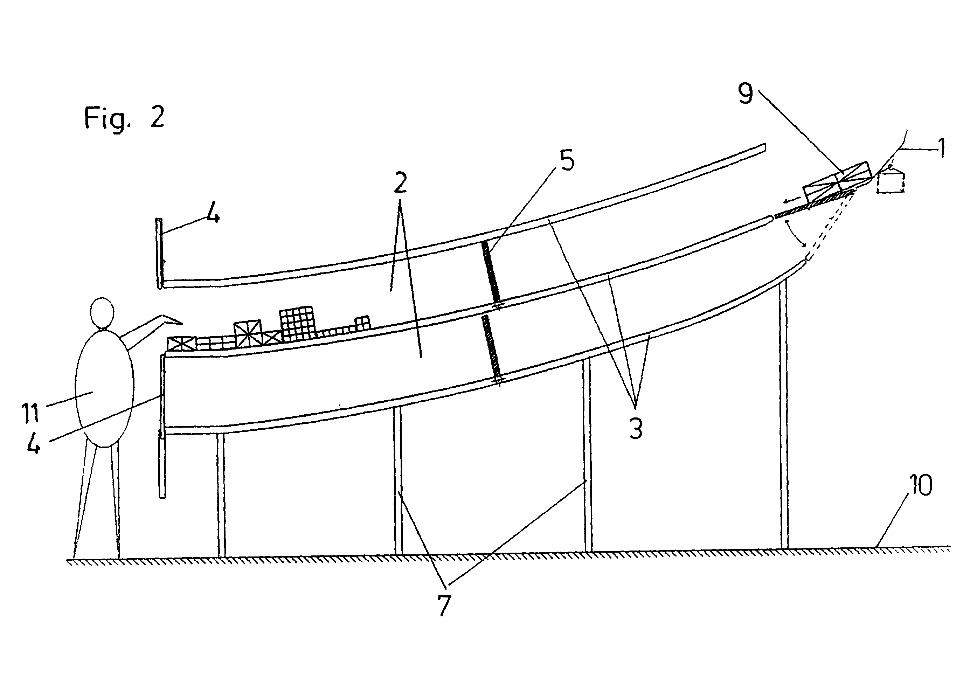

Aus Fig. 1 und 2 wird der prinzipielle Aufbau einer erfindungsgemäßen Aufteileinrichtung ersichtlich. Die von der Aufteileinrichtung 1 geförderten Waren 9 werden gemäß der von einem Steuerrechner (nicht gezeigt) ausgehenden Signale einer bestimmten Kommission zugeteilt. Die Waren 9 werden an ihrem Bestimmungsort durch eine Kippbewegung auf die Gleitklappe 6 geworfen und rutschen von dort unter Einwirkung der Schwerkraft in der zugehörigen Speicherrutsche 2 nach unten. Das erste Warenstück 9 einer Kommission rutscht bis zu der mit einer Klappe oder Türe 4 abgeschlossenen Entnahmeöffnung. Die nachfolgenden Warenstücke 9 schließen daran an, wobei sie auch neben- und übereinander zu liegen kommen können. Die Klappe oder Türe 4 einer Entnahmestelle, die ebenso wie die Speicherrutschen 2 wärmeisoliert ist, bleibt solange geschlossen, bis alle Warenstücke 9 einer Kommission vollständig in einer Speicherrutsche 2 zwischengelagert sind. Über eine Anzeige wird dem Packer 11 die Vollständigkeit eines Auftrags signalisiert, der dann die Klappe oder Türe 4 öffnet und einen bereitstehenden, sogenannten Rolli 12 zu beladen beginnt.

Die in Fig. 2 gezeigten Speicherrutschen 2 sind in der Mitte mit fembetätigten Sperren 5 versehen, durch die die Speicherrutschen 2 in zwei hintereinander liegende Teilsegmente 2a und 2b gegliedert werden können. Wie aus Fig. 2 ersichtlich, können dadurch zwei Auftragsblöcke zeitlich teilweise überlappt abgewickelt werden, indem ein fertig kommissionierter Auftrag (n) durch Betätigung einer Sperre 5 vom nächsten Auftrag (n+1) eines anderen Kunden getrennt werden kann. Nach Beendigung des Packvorgangs des vome liegenden Auftrags kann die Sperre 5 abgesenkt werden, sodaß der nächste Auftrag in den Griffbereich des Packers 11 nachrutscht.

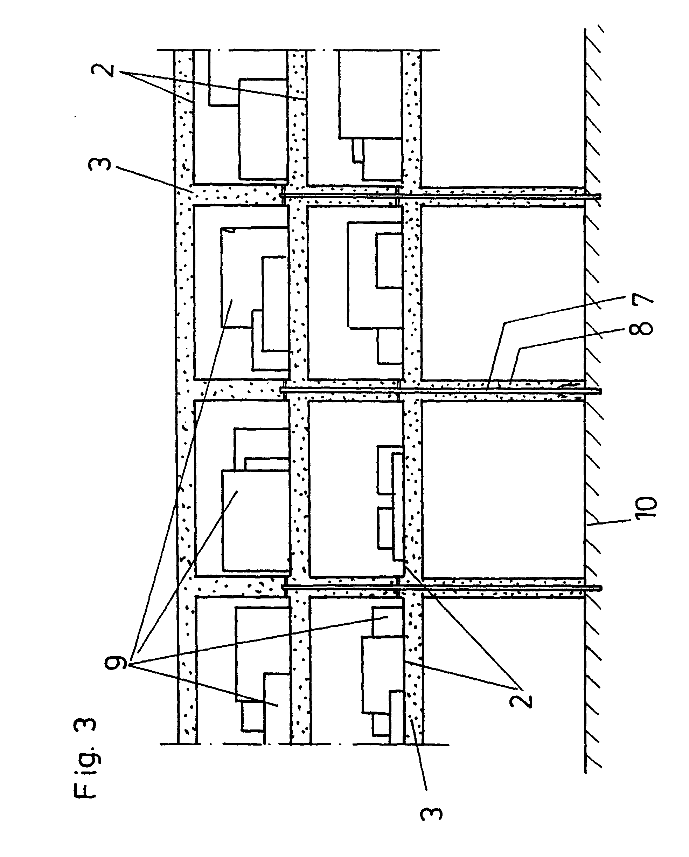

Die konstruktiven Merkmale des beschriebenen Ausführungsbeispiels einer erfindungsgemäßen Aufteileinrichtung lassen sich am besten Fig. 3 entnehmen. Aus wirtschaftlichen und ergonomischen Gründen sind zwei Gruppen (manchmal auch drei Gruppen) von Speicherrutschen 2 in arbeitstechnisch günstiger Greifhöhe unmittelbar übereinander angeordnet. Die Anzahl der nebeneinander zweilagig angeordneten Speicherrutschen 2 richtet sich nach der Systemgröße der Aufteileinrichtung und kann zwischen einigen Dutzend und wenigen hundert Speicherrutschen variieren. Die Aufteilung der Warenstücke 9 an einer Abwurfstelle erfolgt über die elektromechanische Gleitklappe 6, die die Warenstücke 9 entweder in die obere oder untere Speicherrutsche leitet.

Die in ihrem Querschnitt rechteckig ausgebildeten Speicherrutschen 2 sind in konsequenter Anwendung von Prinzipien des Leichtbaus aus dünnem Stahlblech geformt, um den wärmenden bzw. kühlenden Einfluß der Rutschenmasse auf die Tiefkühl- bzw. Molkereiprodukte so gering wie möglich zu halten. Mit gleicher Zielsetzung können hochfeste faserverstärkte Kunststoffe eingesetzt werden. Die Speicherrutschen 2, die innen blank oder feinbeschichtet sind, weisen Abmaße von etwa 1,0 x 0,5 m auf. Sie sind aus praktischen Gründen entlang ihrer mehrere Meter langen Längsachse vorwiegend eindimensional gekrümmt, wobei jedoch auch eine mehrdimensional gekrümmte Ausbildung vorstellbar ist. Der Höhenunterschied zwischen der Unterkante der sorterseitigen, oberen Speicherrutschenöffnung und der mit einer Klappe oder Türe 4 verschlossenen Entnahmeöffnung bestimmt sich aus der Bauhöhe des Sorters gegenüber dem Hallenboden 10 sowie aus den Anforderungen, die aus der Materialpaarung Speicherrutsche/Ware resultieren. Es muß sichergestellt sein, daß die einzelnen Warenstücke 9 in der Speicherrutsche 2 aneinander aufschließen und von selbst bis zur Entnahmeöffnung hin rutschen.

Die Speicherrutschen 2 sind allseitig von einer wärmeisolierenden lsolierstoffschicht 3 aus Schaumstoff umschlossen. Die Dicke der Schicht 3 beträgt mehrere Zentimeter, vorwiegend zwischen 2 und 10 cm. Wie aus Fig. 3 ersichtlich, sind die Speicherrutschen 2 über eine Tragkonstruktion 7 aus Stahl auf dem Hallenboden 10 abgelastet. Durch die Isolierung 8 der Tragkonstruktion 7 wird zusätzlich eine unerwünschte Wärmeeinleitung in die Speicherrutschen 2 vermieden. Bei der Montage einer erfindungsgemäßen Aufteileinrichtung können entweder bereits mit einer Isolierstoffschicht 3 versehene Speicherrutschen 2 aneinander gereiht werden, oder -alternativ dazu - erst nach Beendigung der Montage der Speicherrutschen 2 die bestehenden Zwischenräume bzw. die Ober- und Unterseite des Speicherrutschenbaukörpers ausgeschäumt werden. Im Gegensatz zu den wärmeisolierten Klappen oder Türen 4 sind die sorterseitigen, oberen Öffnungen der Speicherrutschen 2 zur Kosteneinsparung nicht verschlossen, da die schwerere Kaltluft im Falle der Tefkühlkost-Kommissionierung nicht nach oben entweichen kann.

Bei gemischtem Betrieb mit Tiefkühlkost und Molkereiprodukten muß, wie bereits erwähnt, die erfindungsgemäße Aufteileinrichtung bei einer Umgebungstemperatur von +5 °C betrieben werden, um eine Unterkühlung der Molkereiprodukte mit Sicherheit auszuschließen. Durch die Wärmeisolierung der Speicherrutschen 2 wird gleichzeitig sichergestellt, daß für die Dauer der Kommissionierung und Lagerung der Ware in den Speicherrutschen keine Unterbrechung der Tiefkühlkette zu befürchten ist.

Bei der thermodynamischen Beurteilung der Aufteileinrichtung sind zwei Betriebsfälle als besonders kritisch anzusehen: Für die Tiefkühlkost die erste Speicherrutschenfüllung zu Beginn der Frühschicht, wenn das Rutschenmaterial auf etwa +5 °C aufgewärmt ist und für die Molkereiprodukte die erste Speicherrutschenfüllung nach längerem Tiefkühlkost-Betrieb, der das Rutschenmaterial auf Temperaturen von etwa-27 °C abgekühlt hat. Treten diese oder ähnliche Extremfälle relativ häufig auf, müssen Maßnahmen ergriffen werden, um dennoch ohne konvektive Kühlung ein Erwärmen der Tiefkühlkost über -18 °C oder ein Gefrieren der Molkereiprodukte zu vermeiden. Verbesserungen können durch den Einsatz von Speicherrutschen aus faserverstärktem Kunststoff mit stark verzögerter Wärmeaufnahme und -abgabe erzielt werden. Ähnliche Resultate liefert der Einsatz von Speicherrutschen in Sandwich-Bauweise mit sehr geringer Wärmespeicherkapazität in Folge geringen Werkstoffeinsatzes. Zusätzlich kann bei Arbeitsbeginn oder beim Produktwechsel von Molkereiprodukten auf Tiefkühlkost durch Einfüllen sogenannter eutektischer Kühlelemente eine aus lebensmittelhygienischer Sicht bedenkliche Erwärmung der Tiefkühlkost über -18 °C vermieden werden. Ebenso kann durch Einfüllen eutektischer Kühlelemente von +5 °C oder wärmer auch beim Wechsel auf die Kommissionierung von Molkereiprodukten eine Abkühlung auf Temperaturen unterhalb des Gefrierpunktes verhindert werden.

## Patentansprüche

1. Aufteileinrichtung in Form eines Sorters, die zugeführte Waren auf einzelne Ausgabestellen aufteilt, dadurch gekennzeichnet, daß die Ausgabestellen als wärmeisolierte Speicherrutschen (2) ausgebildet sind.

2. Aufteileinrichtung nach Anspruch 1, dadurch gekennzeichnet, daß die Speicherrutschen (2) rohrförmig ausgebildet sind.

3. Aufteileinrichtung nach Anspruch 1 oder 2, dadurch gekennzeichnet, daß die Speicherrutschen (2) Rechteckquerschnitt aufweisen.

4. Aufteileinrichtung nach einem der Ansprüche 1 bis 3, dadurch gekennzeichnet, daß die Speicherrutschen (2) aus Metall, vorzugsweise Stahlblech, gebildet sind.

5. Aufteileinrichtung nach einem der Ansprüche 1 bis 4, dadurch gekennzeichnet, daß die Speicherrutschen (2) aus faserverstärktem Kunststoff gebildet sind.

6. Aufteileinrichtung nach einem der Ansprüche 1 bis 5, dadurch gekennzeichnet, daß die Speicherrutschen (2) mittels einer Isolierstoffschicht (3) wärmeisoliert sind.

7. Aufteileinrichtung nach Anspruch 6, dadurch gekennzeichnet, daß die Isolierstoffschicht (3) aus Schaumstoff besteht und eine Dicke von mindestens 2 cm aufweist.

8. Aufteileinrichtung nach einem der Ansprüche 1 bis 7, dadurch gekennzeichnet, daß die Speicherrutschen (2) eine verschließbare Entnahmeöffnung aufweisen.

9. Aufteileinrichtung nach Anspruch 8, dadurch gekennzeichnet, daß die verschließbare Entnahmeöffnung als wärmeisolierte Klappe oder Türe (4) ausgebildet ist.

10. Aufteileinrichtung nach einem der Ansprüche 1 bis 9, dadurch gekennzeichnet, daß zur Aufteilung der Speicherrutschen (2) in zwei Längsabschnitte (2a, 2b) Sperren (5) vorgesehen sind.

11. Aufteileinrichtung nach einem der Ansprüche 1 bis 10, dadurch gekennzeichnet, daß die Speicherrutschen (2) zweilagig oder dreilagig übereinander angeordnet sind.

12. Aufteileinrichtung nach Anspruch 11, dadurch gekennzeichnet, daß die zugeführte Ware (9) auf je zwei übereinander angeordnete Speicherrutschen (2) mittels einer elektromechanischen Gleitklappe (6) aufteilbar ist.

13. Aufteileinrichtung nach einem der Ansprüche 1 bis 12, dadurch gekennzeichnet, daß die Speicherrutschen (2) mittels der Aufteileinrichtung (1) wahlweise mit Tiefkühlprodukten (-27 °C) oder mit Molkereiprodukten (+5 °C) beschickbar sind.

14. Aufteileinrichtung nach einem der Ansprüche 1 bis 13, dadurch gekennzeichnet, daß die Aufteileinrichtung (1) samt Speicherrutschen (2) in einer Umgebung mit über dem Gefrierpunkt liegender Temperatur angeordnet sind.

15. Aufteileinrichtung nach einem der Ansprüche 1 bis 14, dadurch gekennzeichnet, daß die Speicherrutschen (2) mittels einer Tragkonstruktion (7) auf den Hallenboden (10) abgelastet sind.

## Claims

1. A distributor apparatus (in the form of a sorter) which distributes items supplied thereto to individual delivery locations, characterised in that the delivery locations are in the form of heat-insulated storage chutes (2).

2. A distributor apparatus as set forth in claim 1 characterised in that the storage chutes (2) are of a tubular configuration.

3. A distributor apparatus as set forth in claim 1 or claim 2 characterised in that the storage chutes (2) are of rectangular cross-section.

4. A distributor apparatus as set forth in one of claims 1 through 3 characterised in that the storage chutes (2) are formed from metal, preferably steel sheet.

5. A distributor apparatus as set forth in one of claims 1 through 4 characterised in that the storage chutes (2) are formed from fiber-reinforced plastic material.

6. A distributor apparatus as set forth in one of claims 1 through 5 characterised in that the storage chutes (2) are heat-insulated by means of an insulating layer (3).

7. A distributor apparatus as set forth in claim 6 characterised in that the insulating layer (3) comprises foam and is at least 2 cm in thickness.

8. A distributor apparatus as set forth in one of claims 1 through 7 characterised in that the storage chutes (2) have a closable delivery opening.

9. A distributor apparatus as set forth in claim 8 characterised in that the closable delivery opening is in the form of a heat-insulated flap or door (4).

10. A distributor apparatus as set forth in one of claims 1 through 9 characterised in that barriers (5) are provided for dividing the storage chutes (2) into two longitudinal portions (2a, 2b).

11. A distributor apparatus as set forth in one of claims 1 through 10 characterised in that the storage chutes (2) are arranged in a two-layer or three-layer superposed relationship.

12. A distributor apparatus as set forth in claim 11 characterised in that the item (9) supplied thereto can be distributed by means of an electromechanical slide flap (6) to two respective storage chutes (2) arranged in mutually superposed relationship.

13. A distributor apparatus as set forth in one of claims 1 through 12 characterised in that the storage chutes (2) can be selectively charged by means of the distributor apparatus (1) with frozen products (-27°C) or with dairy products (+5°C).

14. A distributor apparatus as set forth in one of claims 1 through 13 characterised in that the distributor apparatus (1) together with storage chutes (2) are arranged in an environment at a temperature above freezing point.

15. A distributor apparatus as set forth in one of claims 1 through 14 characterised in that the storage chutes (2) are supported on the building floor (10) by means of a support structure (7).

## Revendications

1. Dispositif de répartition sous la forme d'une trieuse qui répartit les marchandises amenées entre différents points de sortie, caractérisé en ce que les points de sortie sont agencés sous la forme de glissières d'accumulation (2) isolées thermiquement.

2. Dispositif de répartition selon la revendication 1, caractérisé en ce que les glissières d'accumulation (2) sont agencées avec une forme tubulaire.

3. Dispositif de répartition selon la revendication 1 ou 2, caractérisé en ce que les glissières d'accumulation (2) possèdent une section transversale rectangulaire.

4. Dispositif de répartition selon l'une des revendications 1 à 3, caractérisé en ce que les glissières d'accumulation (2) sont réalisées en un métal, de préférence une tôle d'acier.

5. Dispositif de répartition selon l'une des revendications 1 à 4, caractérisé en ce que les glissières d'accumulation (2) sont formées par une matière plastique renforcée par des fibres.

6. Dispositif de répartition selon l'une des revendications 1 à 5, caractérisé en ce que les glissières d'accumulation (2) sont isolées thermiquement au moyen d'une couche de matériau isolant (3).

7. Dispositif de répartition selon la revendication 6, caractérisé en ce que la couche de matériau isolant (3) est formée d'un matériau en mousse et possède une épaisseur d'au moins 2 cm.

8. Dispositif de répartition selon l'une des revendications 1 à 7, caractérisé en ce que les glissières d'accumulation (2) possèdent une ouverture de prélèvement pouvant être fermée.

9. Dispositif de répartition selon la revendication 8, caractérisé en ce que l'ouverture de prélèvement pouvant être fermée est agencée sous la forme de volets ou de portes (4) isolés thermiquement.

10. Dispositif de répartition selon l'une des revendications 1 à 9, caractérisé en ce que des dispositifs de blocage (5) sont prévus dans deux sections longitudinales (2a,2b) pour la répartition des glissières d'accumulation (2).

11. Dispositif de répartition selon l'une des revendications 1 à 10, caractérisé en ce que les glissières d'accumulation (2) sont disposées d'une manière superposées suivant deux couches ou trois couches.

12. Dispositif de répartition selon la revendication 11, caractérisé en ce que la marchandise amenée (9) peut être répartie entre respectivement deux glissières d'accumulation superposées (2), à l'aide d'un clapet coulissant électromécanique (6).

13. Dispositif de répartition selon l'une des revendications 1 à 12, caractérisé en ce que les glissières d'accumulation (2) peuvent être chargées au moyen du dispositif de répartition (1) au choix avec des produits surgelés (-27°C) ou avec des produits laitiers (+5°C).

14. Dispositif de répartition selon l'une des revendications 1 à 13, caractérisé en ce que le dispositif de répartition (1) ainsi que les glissières d'accumulation (2) sont disposés dans un environnement à une température supérieure au point de congélation.

15. Dispositif de répartition selon l'une des revendications 1 à 14, caractérisé en ce que les glissières d'accumulation (2) sont supportées sur le sol (10) d'une salle à l'aide d'une structure de support (7).
